(19) Europäisches Patentamt
European Patent Office
Office européen des brevets

(11) Veröffentlichungsnummer: **0 161 523**
**A1**

# (12) EUROPÄISCHE PATENTANMELDUNG

(21) Anmeldenummer: **85104691.2**

(22) Anmeldetag: **19.04.85**

(51) Int. Cl.⁴: **B 02 C 19/12**, B 29 C 37/00

(30) Priorität: **19.04.84 DE 3414902**

(43) Veröffentlichungstag der Anmeldung: **21.11.85 Patentblatt 85/47**

(84) Benannte Vertragsstaaten: **AT BE CH DE FR GB IT LI LU NL SE**

(71) Anmelder: **AluPlast GmbH, Ostrampe, D-5440 Mayen (DE)**

(72) Erfinder: **Buzga, Heinrich, Ing. grad., Hölderlinstrasse 4, D-4048 Grevenbroich (DE)**

(74) Vertreter: **Patentanwälte Zellentin, Zweibrückenstrasse 15, D-8000 München 2 (DE)**

## (54) Verfahren und Vorrichtung zum Vorzerkleinern von Kunststoff-Folien.

(57) Die Erfindung betrifft ein Verfahren zum Vorzerkleinern von Kunststoff-Folien, insbesondere für Recyling-Zwecke. Derartige Folien fallen z.B. in der Landwirtschaft als Abdeckfolien an. Erfindungsgemäß schichtet man das Folienmaterial (9) zu Ballen und preßt es durch einen Gitterrost (4) aus Metall oder durch den Spalt zwischen zwei rotierenden Walzen (12, 13), von denen mindestens eine als Gitterrost (4) in Form einer Trommel (12) ausgebildet ist.

Die Erfindung betrifft auch eine Vorrichtung zur Durchführung des Verfahrens. Erfindungsgemäß weist sie eine Presse mit einem Gehäuse aus seitlichen Wänden (1), einen in dieses eingreifenden, die Querschnittsfläche des Gehäuses ausfüllenden Preßstempel (2), eine Vorrichtung (3) zur Erzeugung des Preßdrucks, einen metallenen Gitterrost (4) und eine Einfüllklappe (5) auf. Die Vorrichtung kann auch zwei gegensinnig rotierende Walzen (12, 13) aufweisen, von denen mindestens eine als Gitterrost (4) in Form einer Trommel (2) ausgebildet ist.

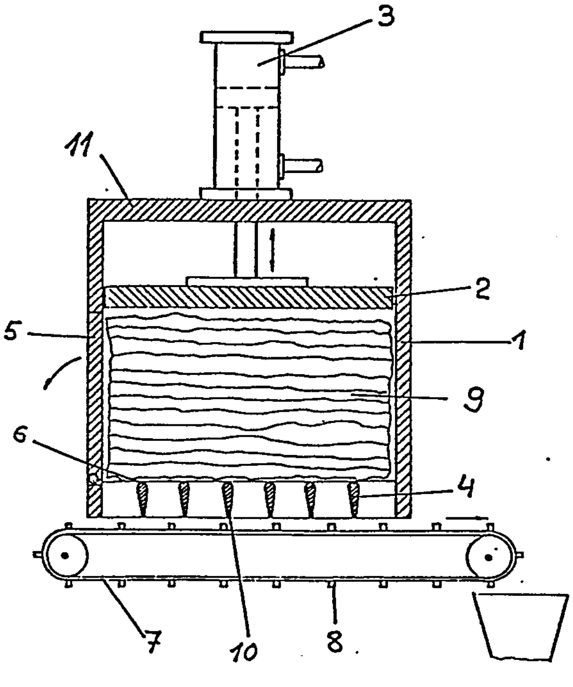


EP 0 161 523 A1

ATENTANWÄLTE ZEITLER
00 München 2, Zweibrückenstraße 15, Telefon 089-22 45 85, Telex 5-22 903, Fax 089-22 20 66
0161523

19.April 1985
Eu 85 399 RZ/fr

# Verfahren und Vorrichtung zum Vorzerkleinern von Kunststoff-Folien

Die vorliegende Erfindung betrifft ein Verfahren zum Vorzerkleinern von Kunststoff-Folien und eine Vorrichtung zur Durchführung des Verfahrens.

Z.B. in der Landwirtschaft fallen Ackerfolien an, die zu Zwecken des Recyclings zerkleinert werden müssen. Derartige Folien sind naturgemäß stark verschmutzt. Auch nach einer Vorreinigung sind in dem Folienmaterial in aller Regel Sand, Steine, gegebenenfalls Eisenteile und andere harte Verunreinigungen vorhanden. Herkömmliche Zerkleinerungsgeräte, wie umlaufende Messer etc., unterliegen daher einem starken Verschleiß.

Der Erfindung liegt die Aufgabe zugrunde, ein verschleißunempfindliches, energiegünstiges und einfach zu handhabendes Verfahren zum Vorzerkleinern von Kunststoff-Folien sowie eine Vorrichtung zur Durchführung des Verfahrens anzugeben.

Diese Aufgabe wird durch ein Verfahren zum Vorzerkleinern von Kunststoff-Folien, insbesondere für Recycling-Zwecke dadurch gelöst, daß man das Folienmaterial zu Ballen schichtet und durch einen Gitterrost aus Metall preßt.

Kunststoff-Folien stellen ein ausreichend weiches Material dar, so daß die auf die Oberkante der Gitterelemente des Gitterrostes auftreffenden harten Verunreinigungen ohne weiteres ausweichen und durch die Gitteröffnungen hindurchgelangen können. Das Folienmaterial wird dabei auf sehr einheitliche, etwa handtellergroße Plättchen zerkleinert.

Der Vorschub beim Durchpressen wird so gewählt, daß den Verunreinigungen genügend Zeit zur Verfügung steht, im unter Druck stehenden Folienmaterial auszuweichen und quasi darin zu fließen. Die Größe der Gitteröffnungen ist so bemessen, daß die üblicherweise in den Folien nach der groben Vorreinigung noch vorhandenen oben erwähnten Verunreinigungen gut durch den Gitterrost hindurchpassen. Die lichte Weite der Gitteröffnungen ist auf die gewünschte Größe der Folienteilchen abzustimmen. Die lichte Weite der Gitteröffnungen ist jedoch nach oben aus Festigkeits- und Stabilitätsgründen begrenzt.

Vorzugsweise wird die beim Durchpressen entstehende Wärme abgeführt. Die Ableitung der durch Reibung beim Durchpressen entstehenden Wärme erfolgt durch die metallenen Rostelemente. Überraschenderweise wurde festgestellt, daß Verklebungen des Folienmaterials auch bei höheren Vorschubraten unterblieben. Die austretenden Folienteilchen haften lediglich teilweise adhäsiv aneinander.

Da bei einem gleichbleibenden Querschnitt der Gitterelemente der Preßdruck und damit die Reibungswärme zunehmen, wird

vorzugsweise der Preßdruck zum Austritt aus dem Gitterrost hin verringert. Dies erfolgt vorteilhafterweise dadurch, daß sich der Querschnitt der Gitterelemente vom Kopf zum Fuß hin verjüngt. Das Folienmaterial kann sich dann unter Verminderung der Reibung und damit unter Temperaturabnahme ausdehnen. Verschweißungen im Randbereich der den Gitterrost durchwandernden Folienteilchen werden damit sicher vermieden.

Vorzugsweise wird das aus dem Gitterrost austretende Folienmaterial vereinzelt und/oder mit Gas oder Flüssigkeitsstrahlen beaufschlagt. Durch die Beaufschlagung mit Gas oder Flüssigkeitsstrahlen wird das Vereinzeln gefördert und gleichzeitig der Reinigungsvorgang der Folienteilchen verstärkt. Da die Folienteilchen Extrudern zur Regranulation oder zur Herstellung neuer Folien im Blasverfahren zugeführt werden, müssen sie gereinigt sein, damit hochwertiges Granulat bzw. hochwertige Folien erzeugt werden können. Aus diesem Grund ist es auch notwendig, daß die Folienteilchen vereinzelt werden, da sonst zwischen aneinanderhaftenden Folienteilchen Verunreinigungen eingeschleust werden.

Um den oben genannten Bedingungen gerecht zu werden, wird vorzugsweise auf das zu zerkleinernde Folienmaterial ein Druck von 400 $kp/cm^2$ bei einem Vorschub von höchstens 0,3 cm/sec ausgeübt.

Um die Gefahr des Verklebens des Folienmaterials beim Durchpressen, auch bei höheren Vorschubgeschwindigkeiten zu unterbinden, wird das Folienmaterial vor dem oder während des Durchpressens durch den Gitterrost mit Flüssigkeit beaufschlagt. Hierzu können die zu einem Ballen gestapelten Folien in Wasser getaucht oder aber besprüht werden.

Eine vorteilhafte Variante der Erfindung besteht darin, daß man das zu Ballen gepreßte Folienmaterial durch den Spalt zwischen zwei rotierenden Walzen preßt, von denen mindestens einer als Gitterrost in Form einer Trommel ausgebildet ist.

Eine vorzugsweise Vorrichtung zur Durchführung des Verfahrens ist gekennzeichnet durch eine Presse mit einem Gehäuse aus seitlichen Wänden, einem in dieses eingreifenden, die Querschnittsfläche des Gehäuses ausfüllenden Preßstempel, einer Vorrichtung zur Erzeugung des Preßdruckes, einem metallenen Gitterrost und einer Einfüllklappe.

Eine derartige Vorrichtung ist einfach aufgebaut und dennoch von hoher Effektivität.

Vorzugsweise sind die Gitterelemente des Gitterrostes zum Preßstempel hin abgerundet und/oder verjüngen sich zum Fuß hin. Auf den Abrundungen können feste Verunreinigungen leicht in die Öffnungen abgleiten und durch die Verjüngung erfolgt eine Reibungsverminderung beim Durchpressen des Folienmaterials, was wiederum weniger Wärme erzeugt.

Durch derartige Gitterelemente wird ein mechanisch sehr stabiler Gitterrost gebildet. Vorzugsweise kann der Rost einen Metallrahmen aufweisen, der gegebenenfalls mit einem Kühlmittel beaufschlagt wird. Bei einer vorzugsweisen Ausführung der Vorrichtung weist der Gitterrost eine Fläche von 9.600 $cm^2$ und eine Höhe von 13 cm bei einer Wandstärke von 1,4 cm auf, wobei die Öffnungen zwischen den Gitterelementen eine Größe von 10 x 10 cm aufweisen. Bei diesen Abmessungen der Vorrichtung haben sich bei einer gut weiterverarbeitbaren Folienteilchengröße lange Standzeiten der Vorrichtung ergeben.

Vorzugsweise ist unterhalb des Gitterrostes ein Vereinzelungswerkzeug angeordnet. Ein vorzugsweises Vereinzelungswerkzeug weist auf einem umlaufenden Transportband angeordnete Schrapperleisten auf. Diese Schrapper werden direkt unterhalb des Rostes angeordnet und transportieren die vereinzelten Folienteilchen mittels des Transportbandes zu einem Sammeltrog. Dem Sammeltrog kann eine Waschanlage vor- oder nachgeschaltet sein.

Die den Gitterrost verlassenden Folienteilchen können auch in ein Wasserbad ausgetrieben werden, wobei das Wasser den Gitterrost kühlt und gleichzeitig - falls das Wasserbad in Turbulenz versetzt wird - die Folienteilchen vereinzelt und weiter reinigt.

Eine andere vorteilhafte Variante besteht darin, daß Gas-oder Flüssigkeitsstrahlen mit hohem Druck auf die Austrittsoberfläche des Gitterrostes geleitet werden, um gleichzeitig den Gitterrost zu kühlen, die Folienteilchen zu vereinzeln und weiter zu reinigen.

Eine andere Variante der Vorrichtung zur Durchführung des Verfahrens ist gekennzeichnet durch zwei gegensinnig rotierende Walzen, von denen mindestens eine als Gitterrost in Form einer Trommel ausgebildet ist. Hierbei können grundsätzlich beide Walzen als Gittertrommel ausgebildet sein oder die zweite Walze kann eine glatte Oberfläche aufweisen. Das Folienmaterial wird hierbei von den Walzen eingezogen und im Bereich der Berührungslinie zwischen den Walzen durch die dort befindlichen Rostelemente gedrückt. Dadurch, daß hierbei nicht der vollständige Gitterrost, sondern jeweils nur ein "Streifen" beaufschlagt wird, ergibt sich eine besonders gute Wärmeabfuhr, da die restlichen Bereiche von der Umgebungsluft gekühlt werden. Das durch den Gitterrost der Trommeln hindurchgepreßte Material fällt in das Innere der Trommeln und kann dort entnommen werden.

Vorzugsweise weist die Walze mit geschlossener Oberfläche den Öffnungen der Trommel angepaßte und in sie eingreifende Vorsprünge auf. Hierdurch wird das Einziehen des Folienmaterials in den Spalt erleichtert. Außerdem wird das Abtrennen der Folienteilchen erleichtert. Das in die Trommel eingedrückte Folienmaterial verbleibt - gegebenenfalls zum Teil mindestens eine Umdrehung in der Trommel - und wird beim nächsten Eingriff durch nachgeschobenes Folienmaterial ausgetrieben, es sei denn, die Höhe der Vorsprünge ist so gewählt, daß sie den Gitterrost vollständig durchdringen, da dann alle Folienteilchen aufeinmal ausgetrieben werden. Bei dieser Variante der Vorrichtung liegen die aus dem Gitterrost ausgetretenen Folienteilchen in loser Schüttung in der Trommel und werden durch die Rotation mitgenommen und emporgehoben. Nach Erreichen einer bestimmten, von der Rotationsgeschwindigkeit abhängigen Höhe, fallen die Folienteilchen zurück, um erneut emporbewegt zu werden. Durch diese mechanische Behandlung werden die gegebenenfalls adhäsiv aneinanderhaftenden Folienteilchen voneinander gelöst. Gleichzeitig reiben die Folienteilchen aneinander, wodurch Verunreinigungen von ihren Oberflächen abgetragen werden.

Um diesen Vorgang zu verstärken, kann vorzugsweise die Trommel in ein Flüssigkeitsbad eintauchend angeordnet sein. Hierbei werden die Folienteilchen nach Art einer Waschmaschine im Trommelinneren gewaschen. Vorzugsweise kann das Wasserbad hierbei länger sein als die Trommel, wodurch im überstehenden Bereich ein beruhigtes Flüssigkeitsbad entsteht, in dem die spezifisch schwereren Verunreinigungen zu Boden sinken, wohingegen die leichteren Folienteilchen aufschwimmen und dort entnommen werden können. Bei Folienmaterial, das ein höheres spezifisches Gewicht als das Flüssigkeitsbad, z.B. Wasser aufweist, können Salzlösungen verwendet werden. Das Folienmaterial kann der Vorrichtung auch mit einer Flüssigkeit versetzt zugeführt werden.

Vorzugsweise sind die Achsen der Walzen parallel zueinander und geneigt angeordnet, wodurch die Teilchen entlang der Neigung der Achsen ausgetragen werden können.

Nachstehend wird die Erfindung anhand von Ausführungsbeispielen der Vorrichtung unter Bezug auf Zeichnungen näher erläutert. Es zeigt in schematischer Darstellung:

Fig. 1 eine Vorrichtung mit einer Presse und ebenem Gitterrost und

Fig. 2 eine Vorrichtung mit Presswalze und Trommelrost.

Die Vorrichtung gemäß Fig. 1 weist eine Presse auf. Das Gehäuse der Presse besteht aus Wänden 1, zwischen denen ein Preßstempel 2, an die Wände 1 reichend mit Hilfe eines Kraftzylinders 3 auf- und abbeweglich geführt ist. Am unteren Ende des Gehäuses ist ein Gitterrost 4 angeordnet. An einer Wand 1 ist eine Einfüllklappe 5 angeordnet, die fest mit dieser Wand 1 verriegelbar ist. Das Gehäuse kann einen rechteckigen oder auch runden Innenquerschnitt aufweisen.

Unterhalb des Gitterrostes 4 ist ein umlaufendes Transportband 7 mit darauf befestigten Schrapperleisten 8 angeordnet. Die Schrapperleisten 8 dienen zur Vereinzelung des aus dem Gitterrost 4 austretenden Materials. Anstelle der Schrapperleisten 8 können auch andere Abstreiforgane vorgesehen sein. Das Vereinzeln kann auch durch Beaufschlagung des Folienmaterials mit Gas- oder Flüssigkeitsstrahlen erfolgen.

Der Kraftzylinder 3, vorzugsweise ein Hydraulikzylinder, stützt sich auf dem Deckel 11 des Gehäuses ab, der mit den Wänden 1 fest verbunden ist. Der Kraftzylinder 3 ist für einen Druck im Bereich 400 kp/cm$^2$ $\pm$ 50 kp/cm$^2$ ausgelegt. Die Arbeitsgeschwindigkeit soll maximal 0,3 cm/sec betragen. Die Gitterelemente 6 weisen in der Regel nicht mehr als eine Stärke von 1,4 cm auf. Vorzugsweise ist bei den gegebenen Gitterelementen 6 und Öffnungen 15 von 10 x 10 cm eine Vorschubgeschwindigkeit von 0,1 cm/sec vorzusehen.

Die den Gitterrost 4 bildenden Gitterelemente 6 sind kopfseitig abgerundet und verjüngen sich zum Fuß 10. Hierdurch wird sichergestellt, daß harte Verunreinigungen schonend seitlich abgedrängt werden und daß die Reibung beim Durchpressen vermindert wird, wodurch auch einer Wärmeentwicklung vorgebeugt wird.

In der Vorrichtung wurde folgender Versuch durchgeführt: Bei mittels des Kraftzylinders 2 gegen den Deckel 11 angehobenem Preßstempel 2 wurde durch die Einfüllklappe 5 ein Ballen aus Folienmaterial 9 oberhalb des Gitterrostes 4 in das Gehäuse eingeführt.

Der Gitterrost 4 wies eine Fläche von 9.600 $cm^2$ auf, wobei die Gitterelemente 6 in einem Abstand von 10 cm voneinander angeordnet waren. Die Öffnungen zwischen den Gitterelementen 6 wiesen somit eine Größe von 10 x 10 cm auf. Das Folienmaterial 9 bestand aus Polyäthylen-Ackerfolie. Der Ballen wies eine Schichthöhe von 120 cm auf. Der Preßstempel wies eine, der Fläche des Gitterrostes 8 entsprechende Druckfläche von 9.600 $cm^2$ auf. Der Preßstempel wurde mit einer Kraft von 400 Tonnen beaufschlagt, woraus sich ein Vorschub von 1 cm/sec. ergab.

Das durch den Gitterrost 4 hindurchgepreßte Folienmaterial 9 wies eine Größe von 10 x 10 cm auf und ließ sich leicht vereinzeln.

Der Gitterrost 4 wies auch nach mehrmaliger Benutzung nur geringe Kratzspuren auf, obwohl in den Ackerfolien noch 8 Gew.% Steine einer Größenordnung von 2 bis 30 mm Durchmesser sowie Sand enthalten waren.

Es ist auch möglich, das Folienmaterial 9 anders zuzuführen, insbesondere dann, wenn der Deckel 11 mit dem Preßstempel 2 entfern- oder verschwenkbar am Gehäuse angeordnet ist. Selbstverständlich ist auch ein Durchpressen des Folienmaterials 9 nach oben möglich, bei entsprechend umgekehrter Anordnung von Preßstempel 2 und Gitterrost 4.

Bei dem in Figur 2 dargestellten Ausführungsbeispiel ist der Gitterrost 4 als drehbare Trommel 12 ausgebildet. Mit der Trommel 12 wirkt eine ebenfalls drehbare Walze 13 zusammen. Die Walze 13 kann eine glatte Oberfläche oder - wie dargestellt - mit Vorsprüngen 14 versehen sein, die zahnradartig in die Öffnungen 15 zwischen den Gitterelementen 6 der Trommel 12 eingreifen.

Die Trommel 12 kann in einen Wasserkasten 16 umlaufen. Vorzugsweise taucht die Trommel 12 nur gering unter den Badspiegel 17 im Wasserkasten 16 ein.

Die Vorrichtung arbeitet wie folgt: Das zu einem Ballen gepreßte Folienmaterial 9 wird dem Spalt zwischen Walze 13 und Trommel 12 zugeführt und durch das Zusammenwirken von Walze 13 und Trommel 12 in die Öffnungen 15 hinein- und hindurchgedrückt, wobei die gebildeten Folienteilchen 19 in das Innere der Trommel gelangen. Durch eine Walze 13 mit Vorsprüngen 14 wird auch eine Verbesserung des Einzugs des Ballens aus Folienmaterial 9 in den Spalt erreicht.

Taucht der Trommelboden 18 nur gering unter den Badspiegel 17 eines im Wasserkasten 16 enthaltenen Flüssigkeitsbades ein, ergibt sich im Innern der Trommel 12 im Flüssigkeitsbad eine hohe Dichte der Folienteilchen 19, wodurch diese aneinanderreiben, was ein verstärktes Ablösen von Schmutz von den Folienteilchen 19 bewirkt. Zur Verstärkung dieser Eigenschaft können dem Flüssigkeitsbad oberflächenaktive Substanzen zugegeben werden.

PATENTANWÄLTE ZELLENTI
D-8000 München 2, Zweibrückenstraße 15, Telefon 089-22 45 85, Telex 5-22 903, Fax 089-22

0161523

19.April 1985
Eu 85 399 RZ/fr

Patentansprüche

1. Verfahren zum Vorzerkleinern von Kunststoff-Folien, insbesondere für Recycling-Zwecke, dadurch gekennzeichnet, daß man das Folienmaterial (9) zu Ballen schichtet und durch einen Gitterrost (4) aus Metall preßt.

2. Verfahren nach Anspruch 1, dadurch gekennzeichnet, daß man die beim Durchpressen entstehende Wärme und den Preßdruck zum Austritt aus dem Gitterrost (4) hin verringert.

3. Verfahren nach Anspruch 1 oder 2, dadurch gekennzeichnet, daß das aus dem Gitterrost (4) austretende Folienmaterial vereinzelt und/oder mit Gas- oder Flüssigkeitsstrahlen beaufschlagt wird.

4. Verfahren nach einem der Ansprüche 1 bis 3, dadurch gekennzeichnet, daß auf das zu zerkleinernde Folienmaterial (9) ein Druck von 400 $kp/cm^2$ bei einem Vorschub von höchstens 0,3 cm/sec ausgeübt wird.

5. Verfahren nach einem der Ansprüche 1 bis 4, dadurch gekennzeichnet, daß man das Folienmaterial (9) vor dem oder während des Durchpressens durch den Gitterrost (4) mit Flüssigkeit beaufschlagt.

6. Verfahren nach einem der Ansprüche 1 bis 5, dadurch gekennzeichnet, daß man das zu Ballen gepreßte Folienmaterial (9) durch den Spalt zwischen zwei rotierenden Walzen (12,13) preßt, von denen mindestens eine als Gitterrost (4) in Form einer Trommel (12) ausgebildet ist.

7. Vorrichtung zur Durchführung des Verfahrens nach einem der Ansprüche 1 bis 6, gekennzeichnet durch eine Presse mit einem Gehäuse aus seitlichen Wänden (1), einem in dieses eingreifenden, die Querschnittsfläche des Gehäuses ausfüllenden Preßstempel (2), einer Vorrichtung (3) zur Erzeugung des Preßdruckes, einem metallenen Gitterrost (4) und einer Einfüllklappe (5).

8. Vorrichtung nach Anspruch 7, dadurch gekennzeichnet, daß die Gitterelemente (6) des Gitterrostes (4) zum Preßstempel (2) hin abgerundet sind und/oder sich zum Fuß (10) hin verjüngen.

9. Vorrichtung nach Anspruch 7 oder 8, gekennzeichnet dadurch, daß der Gitterrost (4) eine Fläche von 9600 $cm^2$ und eine Höhe von 13 cm bei einer Wandstärke von 1,4 cm aufweist, wobei die Öffnungen zwischen den Gitterelementen (6) eine Größe von 10 x 10 cm aufweisen.

10. Vorrichtung nach einem der Ansprüche 7 bis 9, gekennzeichnet durch ein unterhalb des Gitterrostes (4) angeordnetes Vereinzelungswerkzeug.

11. Vorrichtung nach Anspruch 10, dadurch gekennzeichnet, daß das Vereinzelungswerkzeug auf einem umlaufenden Transportband (7) angeordnete Schrapperleisten (8) sind.

12. Vorrichtung zur Durchführung des Verfahrens nach einem der Ansprüche 1 bis 6, gekennzeichnet durch zwei gegensinnig rotierende Walzen (12,13), von denen mindestens eine als Gitterrost (4) in Form einer Trommel (12) ausgebildet ist.

13. Vorrichtung nach Anspruch 12, dadurch gekennzeichnet, daß die Walze (13) in die Öffnungen (15) der Trommel (12) eingreifende Vorsprünge (14) aufweist.

14. Vorrichtung nach Anspruch 12 oder 13, dadurch gekennzeichnet, daß die Trommel (12) in ein Flüssigkeitsbad eintauchend angeordnet ist.

15. Vorrichtung nach einem der Ansprüche 12 bis 14, dadurch gekennzeichnet, daß die Achsen der Walzen (12,13) parallel zueinander geneigt angeordnet sind.

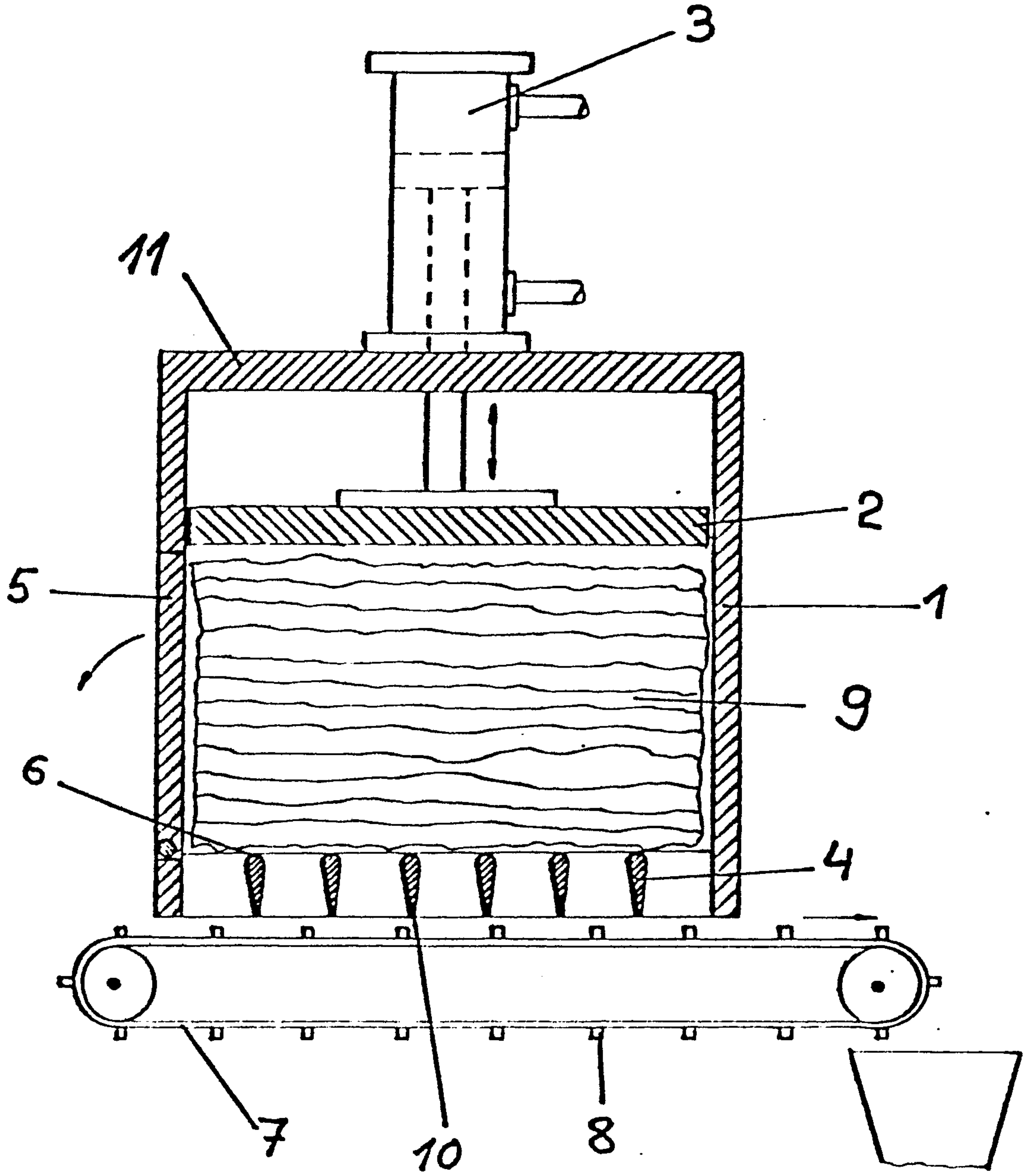


Fig. 1

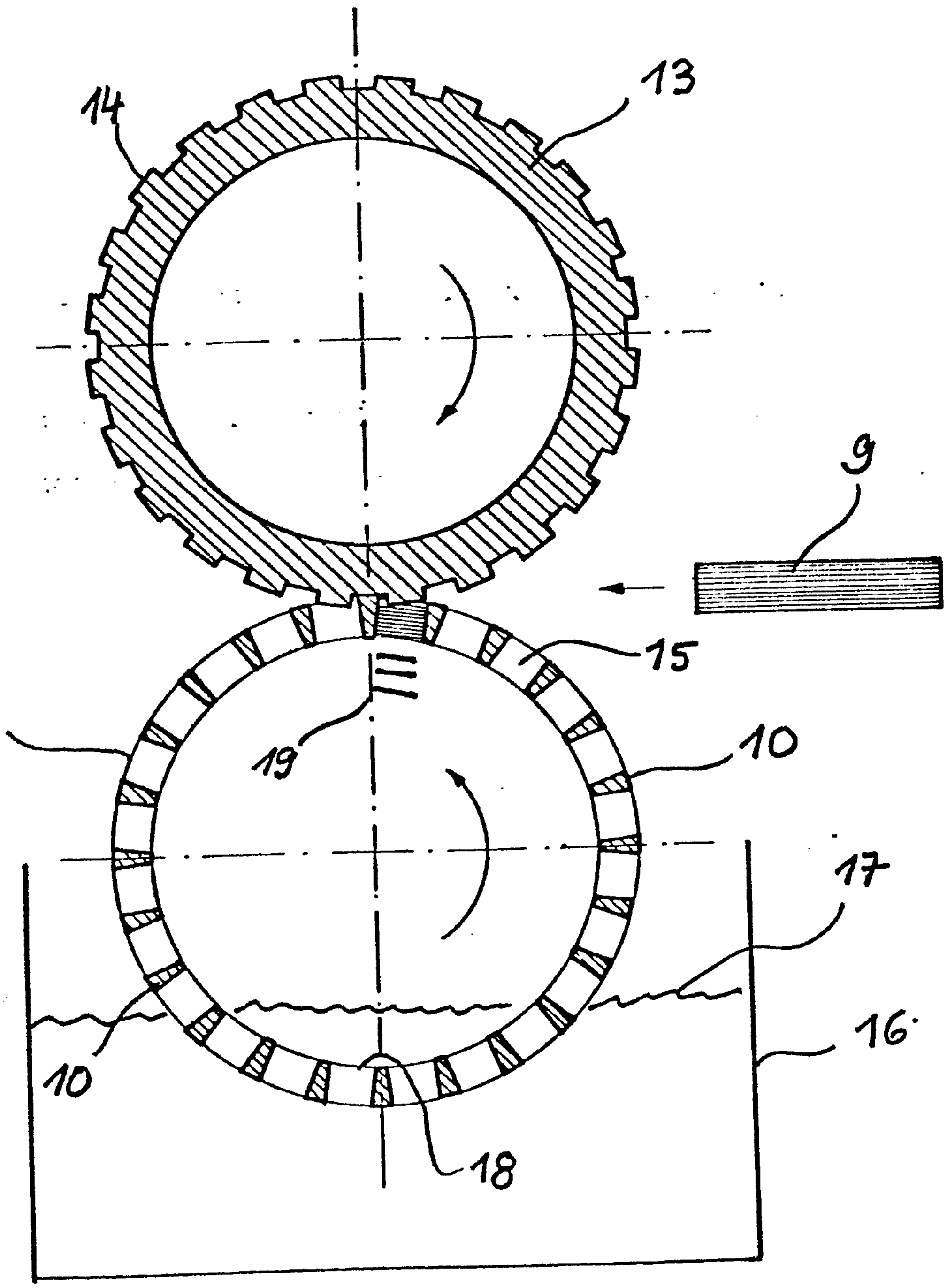


Fig 2

Europäisches Patentamt

**EUROPÄISCHER RECHERCHENBERICHT**

0161523

Nummer der Anmeldung

EP 85104691.2

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | DE - A1 - 2 509 380 (DAL)<br>* Gesamt *<br>-- | 1,7 | B 02 C 19/12<br>B 29 C 37/00 |
| A | US - A - 3 744 361 (VAN DOORN)<br>* Gesamt *<br>-- | 1,12 | |
| A | DE - A1 - 2 432 087 (EASTMAN KODAK)<br>* Gesamt *<br>-- | 1,12 | |
| A | DE - A - 1 952 899 (ILLINOIS TOOL WORKS)<br>* Gesamt *<br>-- | 1 | |
| A | DE - A - 1 507 473 (GEBR. BÜHLER AG)<br>* Gesamt *<br>---- | 1 | RECHERCHIERTE SACHGEBIETE (Int. Cl.4)<br>B 02 C<br>B 29 C<br>B 29 B |

Der vorliegende Recherchenbericht wurde für alle Patentansprüche erstellt.

| Recherchenort | Abschlußdatum der Recherche | Prüfer |
|---|---|---|
| WIEN | 12-07-1985 | URBAN |

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument